# EUROPEAN PATENT SPECIFICATION

(11) **EP 1 933 578 B1**
(45) Date of publication and mention of the grant of the patent: **15.11.2017**
(21) Application number: 07014828.3
(22) Date of filing: 27.07.2007
(51) Int. Cl.: H04W 28/06, H04W 36/00, H04W 36/30, H04W 36/38

(54) **Method, system, terminal and network for PS handover processing**
Verfahren, System, Endgerät und Netzwerk zur PS-Weiterleitung
Procédé, système, terminal et réseau pour le traitement du transfert par commutation de paquets

(30) Priority: 27.07.2006 CN 200610103599
(43) Date of publication of application: 18.06.2008
(73) Proprietor: Huawei Technologies Co., Ltd., Longgang District Shenzhen, Guangdong 518129 (CN)
(72) Inventor: Mei, Jingjin, Shenzhen Guangdong Province 518129 (CN); Wang, Chao, Shenzhen Guangdong Province 518129 (CN); Geng, Fenghua, Shenzhen Guangdong Province 518129 (CN); Yuan, Yi, Shenzhen Guangdong Province 518129 (CN)
(74) Representative: Goddar, Heinz J.

(56) References cited:
- WO-A-01/72081
- WO-A-2005/120183
- CN-A- 1 852 532
- US-B1- 6 317 596
- 3GPP: "Technical Specification Group GERAN; Packet-switched handover for GERAN A/Gb mode; Stage 2 (Release 6)" INTERNET CITATION, [Online] XP002450385 Retrieved from the Internet: URL:http://www.3gpp.org/ftp/Specs/archive/ 43%5Fseries/43.129/>

## Description

The present application claims the priority of CN Application No. 200610103599.7 filed on Jul. 27, 2006, titled "METHOD AND SYSTEM FOR PROCESSING HANDOVER FAILURE DURING A PS HANDOVER PROCESS".

### Field of the Invention

The present invention relates to the field of communications, in particular, to PS handover technologies, and specifically, to a method, a system, a terminal and a network for PS handover processing.

### Background of the Invention

In a Packet Switched Domain (PS) of the Global System for Mobile Communication (GSM) system, the real-time packet service has strict requirements on the Quality of Service (QoS) of jitter and packet loss rate. Therefore, the jitter and packet loss rate of the real-time packet service are usually lowered by PS handover.

The PS handover may be classified to different types depending on different classifying methods. According to the mode of the Mobile Station (MS), the PS handover may be classified into PS handover of A/Gb mode to A/Gb mode, PS handover of A/Gb mode to lu mode, and PS handover of lu mode to lu mode; according to different network elements concerned, the PS handover may be classified into Intra source Base Station System (BSS) handover, Intra Service GPRS Supporting Node (SGSN) handover and Inter SGSN handover; and according to whether it is synchronous, the PS handover may be divided into synchronous PS handover and asynchronous PS handover. Wherein, the synchronous PS handover means that the source cell where an MS exists before the PS handover is synchronous with the target cell where the MS exists after the PS handover. Because the MS knows the Timing Advance (TA), the step in which the MS sends an Access Burst and obtains the TA in the target cell is optional, and the MS may send a Normal Burst directly. Wherein, the asynchronous PS handover means that the source cell where the MS exists before the PS handover is asynchronous with the target cell where the MS exists after the PS handover, so that before the MS sends a Normal Burst in the target cell, it must first obtain the TA by sending an Access Burst.

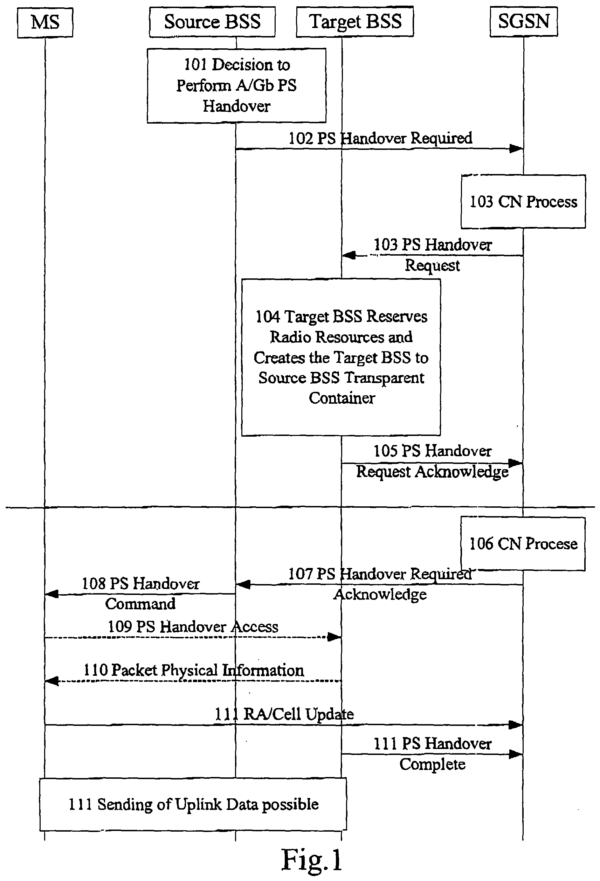

A normal PS handover process is as shown in Figure 1, which includes a PS handover preparation phase and a PS handover execution phase as follows:

### 1. PS Handover Preparation Phase

Process 101: A source BSS decides to initiate a PS handover, e.g. to perform A/Gb PS handover.

There are many causes to trigger a PS handover. For example, the source BSS may trigger a PS handover according to a measurement report from an MS; the source BSS may also trigger a PS handover according to a message for the cell reselection reported by an MS initiatively, such as a Packet Cell Change Notification; or when the service cell resources of the source BSS are limited, the BSS initiates a PS handover, or the source BSS initiates a PS handover according to a UMTS Territorial Radio Access Network (UTRAN) Cell Change Order (CCO) coming from an SGSN, so that the MS can receive a better service in the new cell.

Process 102: The source BSS sends a PS handover request message, e.g. PS Handover Required, to the SGSN, wherein a handover cause value, a source cell ID and a target cell ID are carried in the PS Handover Required.

If the source BSS triggers a PS handover according to a measurement report from an MS, or if the source BSS initiates a PS handover because the service cell resources are limited, the target cell may be selected by the source BSS according to the measurement result or load; if the source BSS triggers a PS handover according to a message for cell reselection reported by an MS initiatively, or if the source BSS initiates a PS handover according to a UTRAN CCO from an SGSN, the target cell may be selected by the MS or other BSS and notified to the source BSS.

Block 103: After the SGSN receives the PS handover request message, e.g. PS Handover Required sent by the source BSS, it determines whether the current PS handover is an Intra BSS handover or an Intra SGSN handover or an Inter SGSN handover according to the source cell ID and target cell ID, and then performs the subsequent operations according to the type of the PS handover that is determined.

The SGSN may determine the type of the PS handover according to the locations of the source cell and the target cell. If the source cell and the target cell are administrated by the same BSS, the current PS handover is an Intra BSS handover; if the source cell and the target cell are administrated by the same SGSN, the current PS handover is an Intra SGSN handover; and if the source cell and the target cell are administrated by different SGSNs, the current PS handover is an Inter SGSN handover.

If the current PS handover is an Intra BSS handover or an Intra SGSN handover, the SGSN determines the target BSS according to the target cell ID and determines whether the Routing Area (RA) is changed; if the RA is changed, the SGSN allocates a Packet Temporary Mobile Subscriber Identity (P-TMSI) to the MS, and obtains a Temporary Logical Link Identifier (TLLI) according to the P-TMSI, and then sends a PS Handover Request to the target BSS, wherein the P-TMSI and TTLI are carried in the PS Handover Request; if the RA is not changed, the SGSN directly sends a PS Handover Request to the target BSS.

If the current PS handover is an Inter SGSN handover, the source SGSN determines the target SGSN according to the target cell ID, then interacts with the target SGSN and provides the target SGSN with the target cell ID and MS-related information. The target SGSN determines the target BSS according to the target cell ID and sends a PS Handover Request to the target BSS. The source SGSN is an SGSN that controls the source BSS where the MS exists before the PS handover, the target SGSN is an SGSN that controls the target BSS where the MS exists after the PS handover.

Block 104: After the target BSS receives the PS Handover Request, it allocates and reserves radio resources for the MS according to the allocation policy and the current allocable radio resources, and creates a target BSS to source BSS Container.

Process 105: If the current PS handover is an Intra BSS handover or an Intra SGSN handover, the target BSS sends a PS Handover Request Acknowledge to the SGSN, which carries the content of the Container; if the PS handover is an Inter SGSN handover, the target BSS sends a PS Handover Request Acknowledge to the target SGSN, which carries the content of the Container.

The content of the Container is the allocation information of radio resources from the target BSS to the source BSS, e.g. the information which describes the radio resources allocated to an MS, such as Temporary Flow Identity (TFI). The radio resources allocated and reserved for an MS by the target BSS include at least an uplink Temporary Block Flow (TBF), which may be identified by a Uplink State Flag (USF).

The content of the Container may carry a PS Handover Command message. The content of the message may include: PAGE_MODE, Global TFI, CONTAINER_ID and PS Handover to A/Gb Mode Payload or PS Handover to UTRAN/GERAN lu Mode Payload. Wherein, the payload consists of two parts, radio access and core network. The radio access part includes a synchronous handover indication, uplink and downlink TBF parameters of dynamic allocation or extended dynamic allocation, a PS Handover reference and general parameters for accessing the target cell. The core network part includes parameters for frame synchronization and encryption.

### 2. PS Handover Execution Phase

Block 106: If the current PS handover is an Inter SGSN handover, after the target SGSN receives the PS Handover Request Acknowledge, it sends the handover information to the source SGSN, such as Network Service Access Point Identifier (NSAPI) or User plane of GPRS Tunneling Protocol Number (GTP-U Number). If the current PS handover is an Intra BSS handover or an Intra SGSN handover, the present block is omitted.

Process 107: The SGSN sends a PS Handover Required Acknowledge to the source BSS and notifies the source BSS to prepare to switch, wherein the PS Handover Required Acknowledge carries the content of the Container. If the current PS handover is an Inter SGSN handover, the SGSN in the present process is the source SGSN. The content of the Container in Process 107 is similar to the content of the Container in Process 105.

Process 108: After the source BSS receives the PS Handover Required Acknowledge, it stops the uplink service of the MS according to the QoS requirements, and then the source BSS interrupts the Logic Link Control (LLC) Protocol Data Unit (PDU) of the downlink TBF of the MS, and sends a PS Handover Command to the MS for notifying the MS to perform PS handover, wherein the PS Handover Command carries the target BSS ID.

Process 109: After the MS receives the PS Handover Command, it suspends the uplink user data, caches or discards the uplink user data according to the QoS requirements of the current service, and then the MS starts to execute the PS Handover Command, switches to the timeslot and radio channel of the target cell according to the target BSS ID, and sends a PS Handover Access message carrying handover reference to the target BSS according to the PS Handover Command. The handover reference is adapted to identify the MS by the target cell, and the target cell determines whether the MS accesses the target cell according to the handover reference. After the target cell allocates radio resources to the MS, it waits for the access of the MS.

Process 110: After the target BSS receives the PS Handover Access message, it returns a Packet Physical Information message to the MS, and a TA is carried in the Packet Physical Information message for notifying the MS of the correct TA. If the current PS handover is a synchronous PS handover, the present process may be omitted; if the current PS handover is an asynchronous PS handover, the present process must be executed.

Block 111: The MS sends an Radio Link Control (RLC)/ Media Access Control (MAC) data block of the Normal Burst Format to the target BSS.

The MS resumes the sending of the uplink LLC PDU, such as location update request, etc., with the Normal Burst Format on the radio channel allocated by the target BSS.

After the target BSS receives the first correct RLC/MAC data block of the Normal Burst Format from the MS, it sends a PS handover complete message, e.g. PS Handover Complete, to the SGSN via a Gb interface and notifies the SGSN that the PS handover is completed.

If it is a synchronous handover, the MS may directly sends an RLC/MAC data block of the Normal Burst Format to the target BSS, rather than accessing the target BSS by sending a PS Handover Access message. Thus, the target BSS may skip the process of sending a corresponding Packet Physical Information message to the MS. Therefore, Process 109 and Process 110 may be omitted.

It can be seen from the above description that in Block 104 of the PS handover preparation phase, after the target BSS receives a PS Handover Request sent by the SGSN, it needs to reserve radio resources for the MS, wherein the radio resources at least includes the uplink TBF; and in Process109 of the PS handover execution phase, the MS needs to send a PS Handover Access message to the target BSS, thus, the MS can only send a PS Handover Access message to the target BSS after it detects the allocated uplink TBF on the allocated channel, and the PS Handover Access message must be sent on a block allocated by the uplink TBF.

During the above normal PS handover process, due to certain reasons, a PS handover failure may occur before Process109 is executed. The reasons may include:
1. An uplink or downlink PDCH is not properly specified in the network, or the multislot capability of the terminal is violated.
2. The terminal does not obtain enough valid PSI or SI.
3. The handover command includes an invalid frequency parameter IE; or the handover command includes frequencies that are not in the same frequency band; or the frequency parameter IE included in the handover command is not supported by the terminal.

For a handover failure caused by the synchronization failure in the target cell, the MS directly returns to the source cell and sends a Packet Cell Change Failure message carrying an appropriate cause value to the source BSS.

Additionally, during the PS handover execution process, with Process 109, when the MS accesses the target cell, an initial access failure in the target cell may occur due to certain reasons, which include:
1. It fails to allocate the USF (Uplink State Flag) bit in the target cell.
2. No resource is allocated to at least one uplink TBF in the target cell.
3. The terminal does not receive an acknowledgment to Physical Information after the terminal sends an Access Burst in the target cell.

For a handover failure that occurs when cell reselection fails, e.g. when an initial access fails, the MS directly returns to the source cell and sends a Packet Cell Change Failure message carrying an appropriate cause value to the source BSS. This has related description in the protocol: for example, when cell reselection fails, e.g. when an initial access failure occurs, the MS returns to the source cell, sends a Packet Cell Change Failure message carrying an appropriate cause value to the source BSS, and stops a timer T3176; moreover, during the PS handover execution process, when the whole handover fails due to the initial access failure on the target cell, the terminal should return to the source cell and send out a Packet Cell Change Failure message that carries an appropriate cause.

When a handover failure occurs due to other causes, the MS directly returns to the source cell and sends a Packet Cell Change Failure message carrying an appropriate cause value to the source BSS.

In the prior art, a processing procedure after a terminal fails to handover is provided, the core concept of which lies in that: during a PS handover process of mobile communications, if a handover failure occurs, no matter what the failure cause is, a Packet Cell Change Failure message is sent to the network by the terminal that returns to the source cell, and the failure cause value carried in the message is PS Handover failure.

The failure cause value is encoded in 4 bits, specifically as follows:

| | |
|---|---|
| 0 0 0 0 | Frequency not implemented |
| 0 0 0 1 | No response on target cell |
| 0 0 1 0 | Immediate Assign Reject or Packet Access Reject on target cell |
| 0 0 1 1 | On going CS connection |
| 0 1 0 0 | PS Handover failure |
| 0 1 0 1 | MS in GMM (GPRS Mobility Management) Standby state |
| 0 1 1 0: | Forced to the Standby state |

All others Reserved for future use

Thus it can be seen that for a PS handover failure, no matter a synchronization failure or an initial access failure occurs during the PS handover process, there is only one code, i.e., 0100, for the failure cause value carried in the Packet Cell Change Failure message that is sent to the network by the terminal. Therefore, the object that different handover failures should have corresponding appropriate failure cause values cannot be realized, and the handover failures due to different failure causes cannot be distinguished.

Additionally, in view of the practical process, for a synchronization failure and an initial access failure on the target cell, the operations performed by the network are different. For a synchronization failure, the terminal does not need to access the target cell, it returns to the source cell directly; however, for an access failure, the terminal needs to initiate an access operation to the target cell, and it only returns to the source cell due to the access failure. Therefore, the network handover control may be influenced due to the fact that handover failures due to different failure causes cannot be distinguished.

WO 01/72081 A describes an intercell handover method in UMTS mobile systems in TDMA-SCDMA technique (and also FDMS-SDMA) with full duplexing of the TDD type. The complexity of the technique adopted requires a frame synchronization mechanism employing a downlink pilot signal, broadcasting transmitted by the base station, echoed by signature sequences transmitted by the single Mobile units in the procedures foreseeing an uplink access. The above, together with the high cipher speed (1.28 Mchip) imposed by the CDMA technique, makes inappropriate the addition of other fields to the sequence of the downlink pilot, which shall remain a pure synchronization sequence. Contrarily to the GSM, a field is missing in the synchronism burst for the transport of the system frame number FSN, absolutely necessary for the iperframe synchronism and the starting of ciphering on the channel. The information on SFN is included in the common signaling channel as other broadcasting information. This would unacceptably slow the handover and therefore a message has been created and put at disposal of the network to return the current system frame number FSN in the new cell in a dedicated mode, in reply to the HANDOVER ACCESS message sent by the Mobile.

WO 2005/120183 A provides a handover execution and communication resumption in a wireless access system. Performing a handover includes communicating with a serving base station through a first communication link and receiving from the serving base station, handover information associated with at least one candidate target base station. The method also includes transmitting handover indicator to the serving base station indicating a handover operation to a selected target base station and performing a ranging procedure with the selected target base station to establish a second communication link with the selected target base station while maintaining the first communication link with the serving base station. The method also includes being released from the serving base station in response to a handover complete status message from the selected target base station to the serving base station or resuming normal communication with the serving base station if the handover fails with the selected target base station.

### Summary of the Invention

The invention provides a method according to claim 1 and a network of claim 5.

The embodiments of the invention provide a method and a system for PS handover processing, by means of which a network can definitely distinguish between handover failures due to different failure causes, so that a reasonable handover control may be performed according to different handover failures.

In an embodiment of the invention, there is further provided a terminal, by means of which the object that different types of handover failures should have corresponding appropriate failure cause values may be achieved.

In an embodiment of the invention, there is further provided a network for PS handover processing, this network can definitely distinguish between handover failures due to different failure causes, so that a reasonable handover control may be performed according to different handover failures, and resource allocation may be optimized during the handover process.

A method for PS handover processing according to an embodiment of the invention, which includes:
determining, by a terminal, a corresponding failure cause value according to a cause of a handover failure if the handover failure occurs, and sending the failure cause value to a network; and
performing a corresponding handover control by the network according to the failure cause value.

A method for PS handover processing according to an embodiment of the invention, which includes:
determining, by a terminal, a corresponding failure cause value according to a cause of a handover failure if the handover failure occurs, and
sending the failure cause value to a network.

A method for PS hanover processing according to an embodiment of the invention, which includes:
obtaining, by a network, a failure cause value of a terminal handover failure if a handover fails; and
performing a corresponding handover control according to the failure cause value.

A system for PS handover according to an embodiment of the invention, which includes a terminal and a network, wherein:
the terminal includes a failure cause value determination unit and a transfer unit, wherein
the failure cause value determination unit is adapted to determine a corresponding failure cause value according to a cause of a handover failure;
the transfer unit is adapted to send the failure cause value determined by the failure cause value determination unit to the network; and
the network is adapted to determine a failure cause according to the failure cause value and perform a corresponding handover control according to the failure cause.

A terminal according to an embodiment of the invention, which includes a failure cause value determination unit and a transfer unit, wherein:
the failure cause value determination unit is adapted to determine a corresponding failure cause value according to a cause of a handover failure; and
the transfer unit is adapted to send out the failure cause value determined by the failure cause value determination unit.

A network for PS handover processing according to an embodiment of the invention, which includes a failure cause determination unit, a handover failure type determination unit and a handover control unit, wherein:
the failure cause determination unit is adapted to determine a failure cause according to a failure cause value;
the handover failure type determination unit is adapted to determine a corresponding type of the handover failure according to the failure cause; and
the handover control unit is adapted to perform a corresponding handover control according to the type of the handover failure.

It can be seen from the above embodiments of the invention that during a PS handover process of mobile communications, when a handover failure occurs, a terminal can determine different failure cause values according to different causes of the handover failure. Therefore, with the embodiments of the invention, a network can definitely distinguish between handover failures due to different failure causes, so that a reasonable handover control may be performed according to different handover failures, and resource allocation may be optimized during the handover process.

### Brief Description of the Drawings

Figure 1 shows a PS handover process in the prior art;
Figure 2 is a flow chart of a method for PS handover processing according to an embodiment of the invention;
Figure 3 is a structural block diagram of a system for PS handover processing according to an embodiment of the invention;
Figure 4 is another structural block diagram of a system for PS handover processing according to an embodiment of the invention; and
Figure 5 is a structural block diagram of a network for PS handover processing according to an embodiment of the invention.

### Detailed Description of the Embodiments

During PS handover, the causes that lead to a handover failure may include:
1. It fails to allocate the Uplink State Flag (USF) bit in the target cell;
2. No resource is allocated to at least one uplink TBF in the target cell;
3. The terminal does not receive an acknowledgment to Physical Information after the terminal sends an Access Burst in the target cell;
4. An uplink or downlink PDCH is not properly specified in the network, or the multislot capability of the terminal is violated.
5. The terminal does not obtain enough valid PSI or SI.
6. The handover command includes an invalid frequency parameter IE; or the handover command includes frequencies that are not in the same frequency band; or the frequency parameter IE included in the handover command is not supported by the terminal.
7. Other causes that lead to a PS handover failure.

Wherein, the causes described in 1 to 3 appear as the timeout of timers T3216 and T3218 in a mobile phone, which are the main causes that lead to the *no response on target cell failure* in the handover failures; the causes described in 4 to 7 are the main causes that lead to *other PS handover failure* in the handover failures.

Therefore, in the embodiments of the invention, as directed to the above different causes, the MS side and the network are required to negotiate the jointly identified failure cause values corresponding to different causes of the handover failure. Specifically, there are two solutions:
Solution 1: The MS side and the network negotiate the jointly identified failure cause value corresponding to the type of the handover failure that corresponds to the cause of the handover failure.
   4 bits may still be used on the basis of the encoding rule for encoding the failure cause value of the handover failure in the prior art. The codes that have been used in the prior art are utilized to separate the failure cause values corresponding to the *no response on target cell failure* from the PS Handover failure, and these failure cause values are classified into other classes, and the failure cause values corresponding to *other PS handover failure* is separated from the *PS Handover failure* to replace the original classes. For example:
   0 0 0 1 No response on target cell // Code 0001 also identifies a failure cause value when a PS handover failure is caused due to no response on target cell, and this handover failure mainly appears as the timeout of timers T3216 and T3218 in a mobile phone.
   0100 PS Handover failure - other // Code 0100 identifies a failure cause value when *other PS handover failure* is caused due to other causes.
Solution 2: The MS side and the network negotiate the jointly identified failure cause value of the handover failure according to the specific cause of the handover failure, i.e., the causes listed in the above 1 to 7. For example:
   1000 PS Handover failure - other - not properly specify an uplink or downlink PDCH or violates the mobile station's multislot capabilities // Code 1000 identifies a failure cause value when *other PS handover failure* is caused because an uplink and downlink PDCH is not properly specified or the multislot capability of the terminal is violated.
   1001 PS Handover failure - No response on target cell - not receive packet physical information after MS sent Access burst in target cell // Code 1001 identifies a failure cause value when the PS handover failure of no response on target cell is caused because the terminal does not receive an acknowledgment to Physical Information after the terminal sends an Access Burst in the target cell.
   1010 PS Handover failure - other - not stored a valid minimum set of the PSI or SI messages // Code 1010 identifies a failure cause value when *other PS handover failure* is caused because the terminal does not obtain enough valid PSI or SI in the target cell.
   1011 1 PS Handover failure - No response on target cell - failure in waiting for USF // Code 1011 identifies a failure cause value when the PS handover failure of no response on target cell is caused because it fails to allocate a USF in the target cell.
   1100 PS Handover failure - other - invalid Frequency Parameters information element // Code 1100 identifies a failure cause value when *other PS handover failure* is caused because the handover command includes an invalid frequency parameter IE, or frequencies are not in the same frequency band/ the frequency parameter IE is not supported by the terminal.
   1101 1 PS Handover failure - No response on target cell - not provide resources for at least one uplink TBF in the new cell // Code 1011 identifies a failure cause value when the PS handover failure of no response on target cell is caused because no resource is allocated to at least one uplink TBF in the target cell.
   1110 PS Handover failure - other - any other reason not specified // Code 1101 identifies a failure cause value when *other PS handover failure* is caused due to other failure causes.

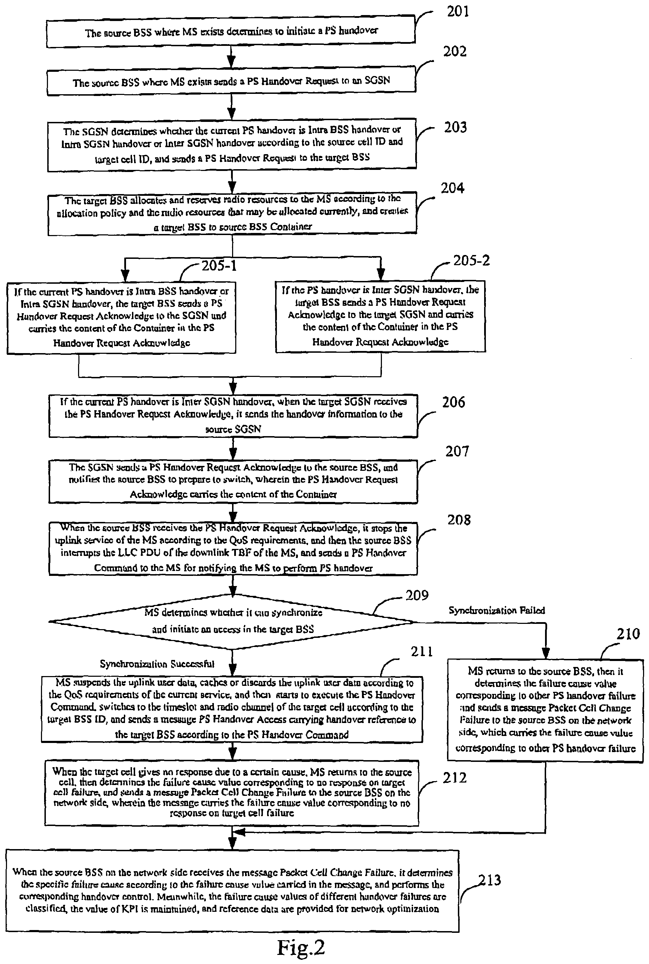

In a method for processing handover failure during a PS handover process according to an embodiment of the invention, when a handover failure is caused due to a certain cause, a terminal that returns to the source cell sends a Packet Cell Change Failure message to the source BSS of the network, wherein the message carries a failure cause value that identifies *no response on target cell failure* or a failure cause value that identifies *other PS handover failure.* The network performs the corresponding processing according to the failure cause value. The specific process is as shown in Figure 2, which includes:
Block 201: The source BSS where a terminal exists decides to initiate a PS handover, e.g. to perform A/Gb PS handover.
Block 202: When the source BSS where the terminal exists decides that it needs to initiate a PS handover, e.g. to Perform A/Gb PS Handover, it sends a PS Handover Required, which carries a handover cause value, the source cell ID and the target cell ID, to the SGSN.
Block 203: After the SGSN receives the PS Handover Required sent by the source BSS, it determines whether the current PS handover is an Intra BSS handover or an Intra SGSN handover or an Inter SGSN handover according to the source cell ID and the target cell ID, and then performs the subsequent operations according to the type of the PS handover that is determined.
Block 204: After the target BSS receives the PS Handover Request, it allocates and reserves radio resources for the MS according to the allocation policy and the currently allocable radio resources, and creates a target BSS to source BSS Container.

There may be following cases in the current PS handover.

Block 205-1: if the current PS handover is an Intra BSS handover or an Intra SGSN handover, the target BSS sends a PS Handover Request Acknowledge to the SGSN, and the content of the Container is carried in the PS Handover Request Acknowledge.

Block 205-2: If the PS handover is an Inter SGSN handover, the target BSS sends a PS Handover Request Acknowledge to the target SGSN, and the content of the Container is carried In the PS Handover Request Acknowledge.

The content of the Container includes the allocation information of radio resources from the target BSS to the source BSS, e.g. the information which describes the radio resources allocated to an MS, such as Temporary Flow Identity (TFI). The radio resources allocated and reserved for an MS by the target BSS at least include an uplink Temporary Block Flow (TBF), which may be identified by a Uplink State Flag (USF).

Block 206: If the current PS handover is an Inter SGSN handover, after the target SGSN receives the PS Handover Request Acknowledge, it sends the handover information to the source SGSN, such as Network Service Access Point Identifier (NSAPI) or User plane of GPRS Tunneling Protocol Number (GTP-U Number). If the current PS handover is an Intra BSS handover or an Intra SGSN handover, the present block may be omitted.

Block 207: The SGSN sends a PS Handover Required Acknowledge to the source BSS, and notifies the source BSS to prepare to handover, wherein the PS Handover Required Acknowledge carries the content of the Container. If the current PS handover is an Inter SGSN handover, the SGSN in the present block is the source SGSN.

Block 208: After the source BSS receives the PS Handover Required Acknowledge, it stops the uplink service of the MS according to QoS requirements, and then the source BSS interrupts the Logic Link Control (LLC) Protocol Data Unit (PDU) of the downlink TBF of the MS, and sends a PS Handover Command to the MS for notifying the MS to perform PS handover, wherein the PS Handover Command carries related information such as the target BSS ID, the radio resources allocated and reserved for the MS by the target BSS, and so on.

Block 209: After the terminal receives the PS Handover Command, it determines whether it can synchronize and initiate an access in the target BSS according to the obtained information of the radio resources allocated and reserved by the target BSS. When it is found out that the terminal fails to perform PS handover in the target cell due to a certain cause, Block 210 is executed first, in other words, the terminal returns to the source BSS, then determines the failure cause value corresponding to the PS handover failure, and sends a Packet Cell Change Failure message to the source BSS in the network, the message carrying the failure cause value corresponding to *other PS handover failure,* such as 0100, and then Block 213 is executed; when it is found out that the terminal can synchronize and initiate an access in the target cell, Block 211 is executed.

Block 211: The MS suspends the uplink user data, caches or discards the uplink user data according to the QoS requirements of the current service. Then the MS starts to execute the PS Handover Command, switches to the timeslot and radio channel of the target cell according to the target BSS ID, and sends a PS Handover Access message carrying handover reference to the target BSS according to the PS Handover Command.

The handover reference is used by the target cell to identify the MS, and to determine whether the MS has accessed the target cell. After the target cell allocates radio resources for the MS, it waits for the access of the MS.

Block 212: When the timer in the mobile phone times out due to a certain cause, i.e., the target cell makes no response, the terminal returns to the source cell, then determines the failure cause value corresponding to the *no response on target cell failure,* and sends a Packet Cell Change Failure message to the source BSS in the network, wherein the message carries the failure cause value corresponding to the *no response on target cell failure,* for example 0001.

Block 213: After the source BSS in the network receives the Packet Cell Change Failure message, it determines the specific failure cause according to the failure cause value carried in the message, and then determines the corresponding type of the handover failure according to the specific failure cause, and performs the corresponding handover control according to the type of the handover failure. Meanwhile, the network classifies the failure cause values of different handover failures, maintains the value of Key Performance Index (KPI) according to the classified data, and provides reference data for network optimization.

Block 213, if the network determines that the type of the handover failure is *no response on target cell failure* according to the handover failure cause determined, the network may record the resources or radio environments in the current target cell, and prevent the terminals in the source cell from performing handover to the target cell as far as possible in a period of time. If the network determines that the handover failure is *other PS handover failure,* it performs the corresponding parameter correction according to the cause value. For example, the network modifies the classmark information of network maintenance, or it checks and corrects the format of the delivered parameter, and makes the allocated frequency point fall in the frequency band which is supported by the terminal, etc., so that it may be ensured that such handover failures will no longer occur. Meanwhile, the network classifies the failure cause values of different handover failures. The classified data are provided for network optimization, and the value of KPI is maintained according to the classified data.

In an embodiment of the invention, there is provided another method for processing the handover failure during the PS handover process, the difference between this embodiment and the aforementioned embodiment lies in that: in this embodiment, the terminal determines the corresponding failure cause value according to the specific cause of the handover failure, and reports the failure cause value to the network, and then the network controls the handover according to the specific failure cause value. The specific process is as follows:

The processes of Process 301 to Process 308 are executed first. These processes correspond to the processes of Block 201 to Block 208 in the first embodiment respectively, so they will not be described in detail again here.

Process 309: After the terminal receives the PS Handover Command, it determines whether it can synchronize and initiate an access in the target BSS according to the obtained information of the radio resources allocated and reserved by the target BSS. When it is found out that the terminal fails to perform PS handover in the target cell due to a certain cause, Process 310 is executed first, in other words, the terminal returns to the source BSS, then determines the failure cause value according to the specific cause of the PS handover failure, and sends a Packet Cell Change Failure message to the source BSS in the network, which carries the failure cause value, and then Process 313 is executed; when it is found out that the terminal can synchronize and initiate an access in the target cell, Process 311 is executed.

In Process 309, if the handover command contains an invalid frequency parameter IE or frequencies are not in the same frequency band, or if the frequency parameter IE is not supported by the terminal, the terminal that returns to the source cell sends a Packet Cell Change Failure message to the network, which carries a failure cause value 1100. When the uplink and downlink PDCH is not properly specified or the multislot capability of the terminal is violated, the terminal that returns to the source cell sends a Packet Cell Change Failure message to the network, which carries a failure cause code 1000. When the terminal does not obtain enough valid PSI or SI in the target cell, the terminal that returns to the source cell sends a Packet Cell Change Failure message to the network, which carries a failure cause code 1010.

Process 311: The MS suspends the uplink user data, caches or discards the uplink user data according to the QoS requirements of the current service. Then the MS starts to execute the PS Handover Command, switches to the timeslot and radio channel of the target cell according to the target BSS ID, and sends a PS Handover Access message carrying a handover reference to the target BSS according to the PS Handover Command.

The handover reference is used by the target cell to identify the MS, and to determine whether the MS has accessed the target cell. After the target cell allocates radio resources for the MS, it waits for the access of the MS.

Process 312: When the target cell makes no response due to a certain cause, the terminal returns to the source cell, then it determines the corresponding failure cause value according to the specific cause that leads to no response on target cell, and then sends a Packet Cell Change Failure message to the source BSS in the network, the message carrying the failure cause value.

For example, when in the target cell, no resource is allocated to at least one uplink TBF, the terminal that returns to the source cell sends a Packet Cell Change Failure message to the network, which carries a failure cause code 1101. When it fails to allocate a USF in the target cell, the terminal that returns to the source cell sends a Packet Cell Change Failure message to the network, which carries a failure cause code 1011. When the terminal does not receive an acknowledgment to Physical Information after the target cell sends an Access Burst in the target cell, the terminal that returns to the source cell sends a Packet Cell Change Failure message to the network, which carries a failure cause code 1001.

Process 313: After the source BSS in the network receives the Packet Cell Change Failure message, it determines the specific failure cause according to the failure cause value carried in the message, and then determines the corresponding type of the handover failure according to the specific failure cause, and performs the corresponding handover control according to the type of the handover failure. Meanwhile, the network classifies the failure cause values of different handover failures, maintains the value of KPI according to the classified data, and provides reference data for network optimization.

The specific process is similar to that of Block 213 in the first embodiment, so it will not be described in detail again here.

In an embodiment of the invention, there is provided another method for processing the handover failure during the PS handover process, wherein after a terminal finds out that the handover fails, it determines a corresponding failure cause value according to the cause of the handover failure, and sends out the failure cause value.

A correlation between each failure cause value and each corresponding failure cause needs to be set up on the terminal in advance, the specific implementation of which is similar to the related implementation described in Block 201 of the first embodiment, so it will not be described in detail again here.

The specific implementation is as follows:
First of all, when a terminal finds out that a handover fails, it determines the corresponding failure cause value according to the cause of the handover failure.

There are two different methods for this process:
Method 1: The terminal determines the type of the handover failure according to the cause of the handover failure, and determines the corresponding failure cause value according to the type of the handover failure.
   Here, there are two types of the handover failures: *no response on target cell failure,* and *other PS handover failure.* When the terminal determines that the handover failure is *other PS handover failure,* it determines that the failure cause value is the failure cause value of *other PS handover failure*; when the terminal determines that the handover failure is a *no response on target cell failure,* it determines that the failure cause value is the failure cause value of the *no response on target cell failure.*
   For example, when the terminal determines that the handover failure is *other PS handover failure,* it is determined that the failure cause value is 0100; when the terminal determines that the handover failure is a *no response on target cell failure,* it is determined that the failure cause value is 0001.
Method 2: The terminal determines the failure cause values corresponding to different causes according to different causes of the handover failure.

The failure cause values corresponding to different causes include:
the failure cause value corresponding to the *no response on target cell failure* that is caused when no resource is allocated to at least one uplink TBF in the target cell; or
the failure cause value corresponding to the *no response on target cell failure* that is caused when it fails to allocate the USF bit in the target cell; or
the failure cause value corresponding to the *no response on target cell failure* that is caused when the mobile phone does not receive the physical information after it sends an Access Burst in the target cell; or
the failure cause value corresponding to the PS handover failure that is caused when the handover command contains an invalid frequency parameter information element IE, or the frequencies are not in the same frequency band, or the frequency parameter IE is not supported by the terminal; or
the failure cause value corresponding to the PS handover failure that is caused when the uplink and downlink PDCH (Packet Data Channel) is not properly specified or the multislot capability of the terminal is violated; or
the failure cause value corresponding to the PS handover failure that is caused when the terminal does not obtain enough valid PSI or SI; or
the failure cause value corresponding to the PS handover failure due to other causes.

For example, the failure to allocate the USF bit in the target cell leads to a *no response on target cell failure,* the corresponding failure cause value determined by the terminal is 1011.

After the terminal determines the failure cause value, it sends out the failure cause value via a Packet Cell Change Failure message.

In another method for processing handover failure during a PS handover process according to an embodiment of the invention, the network distinguishes different failure causes according to the failure cause values, and performs the corresponding handover control according to the failure causes.

A correlation between each failure cause value and each corresponding failure cause needs to be set up in the network in advance, the specific process of which is similar to the related description in Block 201 in the first embodiment, so it will not be described in detail again here.

The specific implementation is as follows:
the network distinguishes different failure causes according to the failure cause values, determines the corresponding type of the handover failure according to the failure cause, and performs the corresponding handover control according to the type of the handover failure.

For example, if the failure cause value received by the network is 1100, the corresponding failure cause determined according to the correlation with the failure cause is "the handover command contains an invalid frequency parameter IE/ frequencies are not in the same frequency band or the frequency parameter IE is not supported by the terminal"; then, it is determined according to the failure cause that the handover failure is *other PS handover failure,* thus the network performs the corresponding parameter correction according to the cause value. For example, The network modifies the classmark information of network maintenance, or checks and corrects the format of the delivered parameter, and makes the allocated frequency point fall in the frequency range which is supported by the terminal, etc., so that it can be ensured that such handover failures will no longer occur.

If the failure cause value received by the network is 1011, then the corresponding failure cause determined according to the correlation with the failure cause is "it fails to allocate a USF in the target cell", and then, it is determined according to the failure cause that the handover failure is a *no response on target cell failure,* thus the network records the resources or radio environments of the current target cell, and prevents the terminals in the source cell from performing handover to the target cell as far as possible in a period of time.

Additionally, the network classifies the failure cause values of different handover failures that are received, provides them for network optimization, and maintains the value of KPI according to the classified data.

Those skilled in the art may appreciate that part or all of the processes in the method according to above embodiments can be accomplished by instructing related hardware with a program. The program may be stored in a computer-readable storage medium, such as ROM/RAM, Magnetic Disk, Campact Disk, etc.

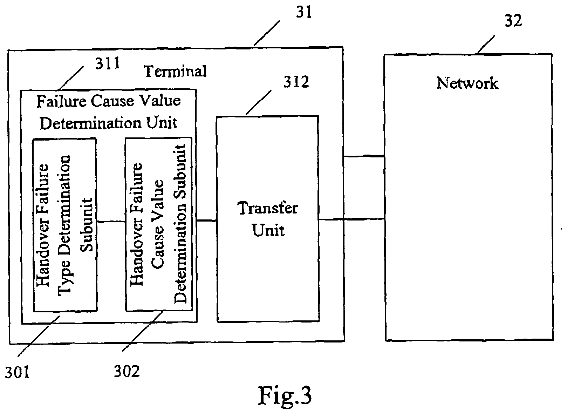

In a system for processing handover failure during a PS handover process according to an embodiment of the invention, the structure is as shown in Figure 3, which includes: a terminal 31 and a network 32. Wherein, the terminal 31 includes a failure cause value determination unit 311 and a transfer unit 312. The failure cause value determination unit 311 includes a handover failure type determination subunit 301 and a handover failure cause value determination subunit 302.

When a handover fails, a terminal that returns to the source cell determines whether the handover failure is a *no response on target cell failure* or *other PS handover failure* via the handover failure type determination subunit 301 according to the cause of the handover failure, and delivers the determined type of the handover failure to the handover failure cause value determination subunit 302.

The handover failure cause value determination subunit 302 determines the corresponding handover failure cause value according to the type of the handover failure. If the handover failure belongs to *other PS handover failure,* it is determined that the failure cause value is the failure cause value corresponding to *other PS handover failure;* if the handover failure is a *no response on target cell failure*, it is determined that the failure cause value is the failure cause value corresponding to the *no response on target cell failure.*

After the corresponding failure cause value is determined by the failure cause value determination unit 311, a message constructing unit (not shown) constructs a Packet Cell Change Failure message and encapsulates the failure cause value into the message, and then delivers the message to the transfer unit 312. However, the transfer unit 312 may also deliver the failure cause value to the network via other messages.

The transfer unit 312 sends the failure cause value determined by the failure cause value determination unit 311 to the network 32.

The network 32 performs a handover control according to the failure cause value. Specifically, when the network receives the Packet Cell Change Failure message, it determines the specific failure cause according to the failure cause value carried in the message, then determines the type of the handover failure according to the failure cause, and then performs the corresponding handover control according to the failure type that is determined: if the failure determined by the network according to the failure cause is a *no response on target cell failure,* the network records the resources or radio environments of the current target cell, and prevents the terminals in the source cell from performing handover to the target cell in a period of time as far as possible; if the failure belongs to *other PS handover failure,* the network performs the corresponding parameter correction according to the cause value, for example, it modifies the classmark information of network maintenance, or checks and corrects the format of the delivered parameter, and makes the allocated frequency point fall in the frequency range which is supported by the terminal, etc., so that it can be ensured that such handover failures will no longer occur.

Additionally, the network 32 may also classify the failure cause values of different handover failures, maintain the value of KPI, and provide reference data for network optimization.

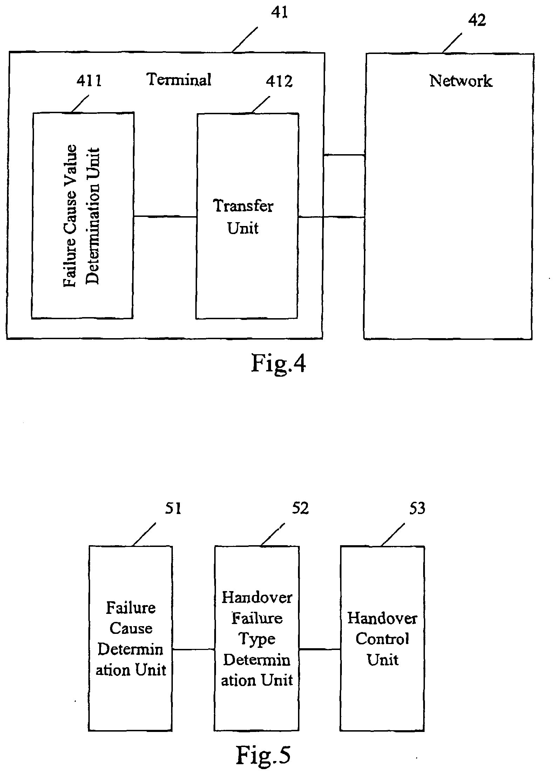

In another system for processing handover failure during the PS handover process according to an embodiment of the invention, the structure is as shown in Figure 4, which includes a terminal 41 and a network 42. Wherein, the terminal 41 includes a failure cause value determination unit 411 and a transfer unit 412.

When a handover fails, a terminal that returns to the source cell determines the failure cause value corresponding to the cause via the failure cause value determination unit 411 according to different causes of the handover failure. These failure cause values include:
the failure cause value corresponding to the *no response on target cell failure* that is caused when no resource is allocated to at least one uplink TBF in the target cell; or
the failure cause value corresponding to the *no response on target cell failure* that is caused when it fails to allocate the USF bit in the target cell; or
the failure cause value corresponding to the *no response on target cell failure* that is caused when a mobile phone does not receive the physical information after the target cell sends out an Access Burst in the target cell; or
the failure cause value corresponding to the PS handover failure that is caused when the handover command contains an invalid frequency parameter information element IE, or the frequencies are not in the same frequency band, or the frequency parameter IE is not supported by the terminal; or
the failure cause value corresponding to the PS handover failure that is caused when the uplink and downlink Packet Data Channel (PDCH) is not properly specified or the multislot capability of the terminal is violated; or
the failure cause value corresponding to the PS handover failure that is caused when the terminal does not obtain enough valid PSI or SI; or
the failure cause value corresponding to the PS handover failure due to other causes.

After the corresponding failure cause value is determined by the failure cause value determination unit 411, a message constructing unit (not shown) may construct a Packet Cell Change Failure message, encapsulate the failure cause value into the message, and then deliver the message to the transfer unit 412. However, the transfer unit 412 may also deliver the failure cause value to the network via other messages.

The transfer unit 412 sends the failure cause value determined by the failure cause value determination unit 411 to the network 42.

The network 42 performs a handover control according to the failure cause value. The specific process is similar to the related description in the embodiment of the invention shown in Figure 3, so it will not be described in detail again here.

Figure 5 shows a functional block diagram of a network for implementing PS handover according to an embodiment of the invention, which includes a failure cause determination unit 51, a handover failure type determination unit 52 and a handover control unit 53. Wherein, the failure cause determination unit 51 distinguishes different failure causes according to the received failure cause value, and delivers the failure cause to the handover failure type determination unit 52. The handover failure type determination unit 52 determines the corresponding type of the handover failure according to the different failure causes, and delivers the determined handover failure type to the handover control unit 53. The handover control unit 53 performs the corresponding handover control according to the type of the handover failure, which mainly includes:
if the handover failure is *no response on target cell failure,* the network may record the resources or radio environments of the current target cell, and prevent the terminals in the source cell from performing handover to the target cell as far as possible in a period of time;
if the handover failure is *other PS handover failure*, the network performs the corresponding parameter correction according to the cause value. For example, it modifies the classmark information of network maintenance, or checks and corrects the format of the delivered parameter, and makes the allocated frequency point fall in the frequency range which is supported by the terminal, etc., so that it can be ensured that such handover failures will no longer occur.

Additionally, the network may further include a failure cause classifying unit. The network may use the failure cause classifying unit to classify different failure cause values, and perform network optimization according to the classified data.

A terminal for processing handover failure during a PS handover process is provided according to an embodiment of the invention, for its structure, reference may be made to the terminal 31 and the terminal 41 as shown in Figure 3 and Figure 4, so it will not be described in detail here.

The type of the handover failure may comprise: no response on *target cell failure,* or *other Packet Switched handover failure.*

It can be seen from the solutions according to the above embodiments of the invention that in the invention, during a PS handover process of mobile communications, when a handover failure occurs, the terminal sends a failure cause value corresponding to the specific cause that leads to the handover failure to the network, and the network performs the corresponding handover control according to the failure cause value that is received. Therefore, with the invention, the network can definitely distinguish between handover failures due to different failure causes, so that a reasonable handover control may be performed according to different handover failures, and the resource allocation may be optimized during the handover process.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims and their equivalents. The features disclosed in the foregoing description, in the claims and/or in the accompanying drawings may, both separately and in any combination thereof, be material for realising the invention in diverse forms thereof.

## Claims

1. A method for Packet Switched handover processing, comprising:
receiving, by a network (32, 42), a failure cause value from a terminal (31, 41), when a failure cause value is determined by the terminal (31, 41) according to a cause of a handover failure if the handover failure occurs, wherein different failure cause values correspond to different causes of the handover failure; and
performing a corresponding handover control by the network (32, 42) according to the failure cause value, **characterized in that** if the network (32, 42) determines that a type of the handover failure is no response on target cell failure according to the handover failure cause, the network (32, 42) prevents the terminal (31, 41) in a source cell from performing handover to a target cell in a period of time;
and the method further comprises:
if the network (32, 42) determines that a type of the handover failure is a PS handover failure other than no response on target cell failure, the network (32, 42) performs a corresponding parameter correction according to the failure cause value; wherein the process of the network (32, 42) performs a corresponding parameter correction according to the failure cause value, comprises:
the network (32, 42) modifies the classmark information of network maintenance, or checks and corrects the format of the delivered parameter, and makes the allocated frequency point fall in the frequency band which is supported by the terminal (31, 41).

2. The method according to claim 1, wherein the method further comprises:
determining, by the terminal (31, 41) and the network (32, 42), a jointly identified failure cause value corresponding to a type of the handover failure, wherein the type of the handover failure is determined according to the cause of the handover failure; or
determining, by the terminal (31, 41) and the network (32, 42), a jointly identified failure cause value corresponding to a cause of the handover failure.

3. The method according to claim 2, wherein the failure cause value corresponding to the cause is:
a failure cause value corresponding to a no response on target cell failure that is caused when no resource is allocated to at least one uplink Temporary Block Flow in a target cell; or
a failure cause value corresponding to the no response on target cell failure that is caused when it fails to allocate a Uplink State Flag bit in a target cell; or
a failure cause value corresponding to the no response on target cell failure that is caused when the terminal does not receive physical information after it sends an Access Burst in a target cell; or
a failure cause value corresponding to other Packet Switched handover failure that is caused when a handover command contains an invalid frequency parameter Information Element, or frequencies are not in a same frequency band, or the frequency parameter Information Element is not supported by the terminal; or
a failure cause value corresponding to other Packet Switched handover failure that is caused when a uplink and downlink Packet Data Channel is not properly specified or a multislot capability of the terminal is violated; or
a failure cause value corresponding to other Packet Switched handover failure that is caused when the terminal does not obtain enough valid Packet System Information or System Information.

4. The method according to anyone of claims 1 to 2, wherein sending the failure cause value to a network (32, 42) comprises:
sending the failure cause value to the network (32, 42) via a packet cell change failure message.

5. A network (32, 42), wherein the network (32, 42) comprises: a failure cause determination unit (51), a handover failure type determination unit (52) and a handover control unit (53);
the failure cause determination unit (51) is configured to determine a failure cause according to a failure cause value from a terminal (31, 41), wherein different failure causes values correspond to different causes of handover failure;
the handover failure type determination unit (52) is configured to determine a corresponding type of the handover failure according to the failure cause; and
the handover control unit (53) is configured to perform a corresponding handover control according to the type of the handover failure **characterized in that** if the network (32, 42) determines that a type of the handover failure is no response on target cell failure according to the handover failure cause, the network (32, 42) is adapted to prevent the terminal (31, 41) in a source cell from performing handover to a target cell in a period of time;
and the network (32, 42) is further configured to perform a corresponding parameter correction according to the failure cause value if the network (32, 42) determines that a type of the handover failure is a PS handover failure other than no response on target cell failure; wherein the process of the network (32, 42) performs a corresponding parameter correction according to the failure cause value, further comprises:
the network (32, 42) modifies the classmark information of network maintenance, or checks and corrects the format of the delivered parameter, and makes the allocated frequency point fall in the frequency band which is supported by the terminal (31, 41).

## Patentansprüche

1. Verfahren zur Verarbeitung eines paketvermittelten Handovers, umfassend:
Empfangen durch ein Netzwerk (32, 42) eines Fehlerursachenwerts von einem Endgerät (31, 41), wenn ein Fehlerursachenwert durch das Endgerät (31, 41) gemäß einer Ursache eines Handover-Fehlers bestimmt wird, falls der Handover-Fehler auftritt, wobei verschiedene Fehlerursachenwerte verschiedenen Ursachen des Handover-Fehlers entsprechen; und
Durchführen einer entsprechenden Handover-Steuerung durch das Netzwerk (32, 42) gemäß dem Fehlerursachenwert, **dadurch gekennzeichnet, dass**, falls das Netzwerk (32, 42) gemäß der Handover-Fehlerursache bestimmt, dass ein Typ des Handover-Fehlers eine Nichtreaktion auf einen Zielzellenfehler ist, das Netzwerk (32, 42) verhindert, dass das Endgerät (31,41) in einer Ursprungszelle in einem Zeitraum ein Handover in eine Zielzelle durchführt;
und das Verfahren ferner umfasst, dass,
falls das Netzwerk (32, 42) bestimmt, dass ein Typ des Handover-Fehlers ein anderer PS-Handover-Fehler als eine Nichtreaktion auf einen Zielzellenfehler ist, das Netzwerk (32, 42) eine entsprechende Parameterkorrektur gemäß dem Fehlerursachenwert durchführt; wobei der Prozess des Netzwerks (32, 42), der eine entsprechende Parameterkorrektur gemäß dem Fehlerursachenwert durchführt, umfasst, dass:
das Netzwerk (32, 42) die Klassenmarkierungsinformationen der Netzwerkwartung modifiziert oder das Format des gelieferten Parameters prüft und korrigiert und bewirkt, dass der zugewiesene Frequenzpunkt im Frequenzband abfällt, das vom Endgerät (31, 41) unterstützt wird.

2. Verfahren nach Anspruch 1, wobei das Verfahren ferner umfasst:
Bestimmen durch das Endgerät (31, 41) und das Netzwerk (32, 42) eines gemeinsam identifizierten Fehlerursachenwerts, der einem Typ des Handover-Fehlers entspricht, wobei der Typ des Handover-Fehlers gemäß der Ursache des Handover-Fehler bestimmt wird; oder
Bestimmen durch das Endgerät (31, 41) und das Netzwerk (32,42) eines gemeinsam identifizierten Fehlerursachenwerts, der einer Ursache des Handover-Fehlers entspricht.

3. Verfahren nach Anspruch 2, wobei es sich bei dem Fehlerursachenwert, welcher der Ursache entspricht, um:
einen Fehlerursachenwert, der einer Nichtreaktion auf einen Zielzellenfehler entspricht, der verursacht wird, wenn mindestens einem temporären Uplink-Blockfluss in einer Zielzelle keine Ressource zugewiesen wird; oder
einen Fehlerursachenwert, welcher der Nichtreaktion auf den Zielzellenfehler entspricht, der verursacht wird, wenn es kein Uplink-Zustandsflagbit in einer Zielzelle zuweist; oder
einen Fehlerursachenwert, welcher der Nichtreaktion auf den Zielzellenfehler entspricht, der verursacht wird, wenn das Endgerät nach dem Senden eines Zugriffsbursts in einer Zielzelle keine physikalischen Informationen empfängt; oder
einen Fehlerursachenwert, der einem anderen Fehler eines paketvermittelten Handovers entspricht, der verursacht wird, wenn ein Handover-Befehl ein ungültiges Frequenzparameter-Informationselement enthält, oder Frequenzen nicht in einem gleichen Frequenzband liegen, oder das Frequenzparameter-Informationselement vom Endgerät nicht unterstützt wird; oder
einen Fehlerursachenwert, der einem anderen Fehler eines paketvermittelten Handovers entspricht, der verursacht wird, wenn ein Uplink- und Downlink-Paketdatenkanal nicht korrekt spezifiziert wird, oder eine Mehrschlitzfähigkeit des Endgeräts missachtet wird; oder
einen Fehlerursachenwert, der einem anderen Fehler eines paketvermittelten Handovers entspricht, der verursacht wird, wenn das Endgerät nicht genügend gültige Paketsysteminformationen oder Systeminformationen erhält,
handelt.

4. Verfahren nach einem der Ansprüche 1 bis 2, wobei das Senden des Fehlerursachenwerts an ein Netzwerk (32, 42) umfasst:
Senden des Fehlerursachenwerts durch eine Paketzellwechselfehlemachricht an das Netzwerk (32, 42).

5. Netzwerk (32, 42), wobei das Netzwerk (32, 42) umfasst: eine Fehlerursachenbestimmungseinheit (51), eine Handover-Fehlertypbestimmungseinheit (52) und eine Handover-Steuereinheit (53);
die Fehlerursachenbestimmungseinheit (51) so konfiguriert ist, dass sie eine Fehlerursache gemäß einem Fehlerursachenwert von einem Endgerät (31, 41) bestimmt, wobei verschiedene Fehlerursachenwerte verschiedenen Ursachen des Handover-Fehlers entsprechen;
die Handover-Fehlertypbestimmungseinheit (52) so konfiguriert ist, dass sie einen entsprechenden Typ des Handover-Fehlers gemäß der Fehlerursache bestimmt; und
die Handover-Steuereinheit (53) so konfiguriert ist, dass sie eine entsprechende Handover-Steuerung gemäß dem Typ des Handover-Fehlers durchführt, **dadurch gekennzeichnet, dass** das Netzwerk (32, 42) so ausgelegt ist, dass es, falls das Netzwerk (32, 42) gemäß der Handover-Fehlerursache bestimmt, dass ein Typ des Handover-Fehlers eine Nichtreaktion auf einen Zielzellenfehler ist, verhindert, dass das Endgerät (31, 41) in einer Ursprungszelle in einem Zeitraum ein Handover in eine Zielzelle durchführt;
und das Netzwerk (32, 42) ferner so konfiguriert ist, dass es eine entsprechende Parameterkorrektur gemäß dem Fehlerursachenwert durchführt, falls das Netzwerk (32, 42) bestimmt, dass ein Typ des Handover-Fehlers ein anderer PS-Handover-Fehler als eine Nichtreaktion auf einen Zielzellenfehler ist; wobei der Prozess des Netzwerks (32, 42), der eine entsprechende Parameterkorrektur gemäß dem Fehlerursachenwert durchführt, ferner umfasst, dass:
das Netzwerk (32, 42) die Klassenmarkierungsinformationen der Netzwerkwartung modifiziert oder das Format des gelieferten Parameters prüft und korrigiert und bewirkt, dass der zugewiesene Frequenzpunkt im Frequenzband abfällt, das vom Endgerät (31, 41) unterstützt wird.

## Revendications

1. Procédé pour le traitement d'un transfert intercellulaire à commutation de paquets, comprenant :
la réception, par un réseau (32, 42), d'une valeur de cause d'échec venant d'un terminal (31, 41), lorsqu'une valeur de cause d'échec est déterminée par le terminal (31, 41) selon une cause d'un échec de transfert si l'échec de transfert se produit, différentes valeurs de causes d'échec de transfert correspondant à différentes causes de l'échec de transfert ; et
l'exécution d'une commande de transfert correspondante par le réseau (32, 42) selon la valeur de la cause de l'échec, **caractérisée en ce que**, si le réseau (32, 42) détermine qu'un type de l'échec de transfert est un échec de manque de réponse sur la cellule cible selon la cause de l'échec de transfert, le réseau (32, 42) empêche le terminal (31, 41) dans une cellule source d'exécuter le transfert vers une cellule cible pendant une période de temps ;
et ce procédé comprenant en outre :
si le réseau (32, 42) détermine qu'un type de l'échec de transfert est un échec de transfert intercellulaire à commutation de paquets autre qu'un échec de manque de réponse sur une cellule cible, le réseau (32, 42) effectue une correction de paramètre correspondante selon la valeur de la cause de l'échec ; dans lequel le processus du réseau (32, 42) qui effectue une correction de paramètre correspondante selon la valeur de la cause d'échec, comprend :
la modification, par le réseau (32, 42), de l'information de l'indicateur de classe de service de la maintenance du réseau, ou la vérification et la correction, par celui-ci, du format du paramètre transmis, et le réseau faisant tomber le point de fréquence attribué dans la bande de fréquences qui est prise en charge par le terminal (31, 41).

2. Procédé selon la revendication 1, ce procédé comprenant en outre :
la détermination, par le terminal (31, 41) et le réseau (32, 42), d'une valeur de cause d'échec identifiée conjointement correspondant à un type de l'échec de transfert, le type de l'échec de transfert étant déterminé selon la cause de l'échec du transfert ; ou la détermination, par le terminal (31, 41) et le réseau (32, 42), d'une valeur de cause d'échec identifiée conjointement correspondant à une cause de l'échec du transfert.

3. Procédé selon la revendication 2, dans lequel la valeur de la cause de l'échec correspondant à la cause est :
une valeur de cause d'échec correspondant à un échec de manque de réponse sur la cellule cible qui est causé lorsqu'aucune ressource n'est attribuée à au moins un flux de blocs temporaires de liaison montante dans une cellule cible ; ou
une valeur de cause d'échec correspondant à l'échec de manque de réponse sur la cellule cible qui est causé lorsqu'elle ne parvient pas à attribuer un bit de drapeau d'état de liaison montante dans une cellule cible ; ou
une valeur de cause d'échec correspondant à l'échec de manque de réponse sur la cellule cible qui est causé lorsque le terminal ne reçoit pas d'informations physiques après avoir envoyé une salve d'accès dans une cellule cible ; ou
une valeur de cause d'échec correspondant à un autre échec de transfert intercellulaire à commutation de paquets qui est causé lorsqu'une commande de transfert contient un élément d'information de paramètre de fréquence invalide, ou
lorsque les fréquences ne sont pas dans la même bande de fréquences, ou lorsque l'élément d'information de paramètre de fréquence n'est pas pris en charge par le terminal ; ou
une valeur de cause d'échec correspondant à un autre échec de transfert intercellulaire à commutation de paquets qui est causé lorsqu'un canal de données par paquets de liaison montante et de liaison descendante n'est pas spécifié correctement ou lorsqu'une capacité de plusieurs intervalles de temps est violée ; ou
une valeur de cause d'échec correspondant à un autre échec de transfert intercellulaire à commutation de paquets qui est causé lorsque le terminal n'obtient pas assez d'informations valides sur le système par paquets ou sur le système.

4. Procédé selon l'une quelconque des revendications 1 ou 2, dans lequel l'envoi de la valeur de la cause d'échec à un réseau (32, 42) consiste en :
l'envoi de la valeur de la cause d'échec au réseau (32, 42) via un message d'échec de changement de cellule de paquets.

5. Réseau (32, 42), ce réseau (32, 42) comprenant : une unité de détermination de cause d'échec (51), une unité de détermination de type d'échec de transfert (52) et une unité de commande de transfert (53) ;
l'unité de détermination de cause d'échec (51) étant configurée de façon à déterminer une cause d'échec selon une valeur de cause d'échec venant d'un terminal (31, 41), différentes valeurs de causes d'échec correspondant à différentes causes d'échec de transfert ;
l'unité de détermination de type d'échec de transfert (52) étant configurée de façon à déterminer un type correspondant de l'échec de transfert selon la cause de l'échec ; et l'unité de commande de transfert (53) étant configurée de façon à exécuter une commande de transfert correspondante selon le type de l'échec de transfert, **caractérisé en ce que**, si le réseau (32, 42) détermine qu'un type de l'échec de transfert est un échec de manque de réponse sur la cellule cible selon la cause de l'échec de transfert, le réseau (32, 42) est adapté de façon à empêcher le terminal (31, 41) dans une cellule source d'exécuter le transfert vers une cellule cible pendant une période de temps ;
et le réseau (32, 42) est configuré en outre de façon à effectuer une correction de paramètre correspondante selon la valeur de la cause d'échec si le réseau (32, 42) détermine qu'un type de l'échec de transfert est un échec de transfert intercellulaire à commutation de paquets autre qu'un échec de manque de réponse sur la cellule cible ;
dans lequel le processus du réseau (32, 42) qui effectue une correction de paramètre correspondante selon la valeur de la cause d'échec, comprend en outre :
la modification, par le réseau (32, 42), de l'information de l'indicateur de classe de service de la maintenance du réseau, ou la vérification et la correction, par celui-ci, du format du paramètre transmis, et le réseau faisant tomber le point de fréquence attribué dans la bande de fréquences qui est prise en charge par le terminal (31, 41).
